Europäisches Patentamt

(19) European Patent Office

Office européen des brevets

(11) Numéro de publication: **0 270 587**
**B1**

(12) FASCICULE DE BREVET EUROPEEN

(45) Date de publication du fascicule du brevet: 08.08.90

(51) Int. Cl.⁵: G 01 L 19/14

(21) Numéro de dépôt: 87903344.7

(22) Date de dépôt: 21.05.87

(86) Numéro de dépót international:
PCT/FR87/00179

(87) Numéro de publication internationale:
WO 87/07375 03.12.87 Gazette 87/27

(54) CELLULE DE CONTENTION D'UN CAPTEUR DE PRESSION NOTAMMENT EN CERAMIQUE.

(30) Priorité: 23.05.86 FR 8607683

(43) Date de publication de la demande:
15.06.88 Bulletin 88/24

(45) Mention de la délivrance du brevet:
08.08.90 Bulletin 90/32

(84) Etats contractants désignés:
AT BE CH DE FR GB IT LI LU NL SE

(56) Documents cités:
DE-A-2 234 690    US-A-3 619 742
DE-A-2 248 004    US-A-4 127 840
DE-A-3 344 799    US-A-4 295 117
Patent Abstract of Japan,vol.8,No.286 (P-324)(1723),27 December 1984,see whole document and JP,A,59148841
Advances in Instrumentation,vol.32,No.2,1977,ISA, (Pittsburgh,US),F.K.Haag et al.:"Development of a sputtered thin film pressure transducer for use over the temperature range of -320 F to 500 F",pages 145-162,see page 148,part (B);fig.2

(73) Titulaire: OTIC FISCHER & PORTER S.A.
151 bis, avenue de la Libération
F-63000 Clermont-Ferrand (FR)

(72) Inventeur: GRAS, Gérard
48, rue de la Libération
F-63530 Volvic (FR)

(74) Mandataire: Chanet, Jacques
B.P. 27 95bis avenue de Royat
F-63400 Chamalières (FR)

Courier Press, Leamington Spa, England.

## Description

La présente invention est du domaine des moyens de mesure des grandeurs physiques et elle a plus précisément pour objet une cellule pour la mesure de la pression, ladite cellule mettant en oeuvre un capteur de type connu.

On connaît des capteurs de pression comprenant une membrane déformable sur une face de laquelle sont fixées des jauges de contrainte; la conformation de la membrane et la disposition des jauges est telle que la variation du signal électrique traversant le capteur soit proportionnelle à la différence de pression entre les deux faces de la membrane; un type de capteurs connus est constitué par un boitier cylindrique en céramique obturé sur l'une de ses extrémités circulaires par une membrane elle-meme en ceramique.

On connaît par les publications DE—A—2.248.004, US—A—4.127.840 et US—A—3.619.742 des boîtiers de contention de capteurs de mesure de pression à membrane déformable; dans aucun de ces boîtiers connus le capteur n'est emprisonné dans un évidement de volume correspondant à celui du capteur.

Un premier objet de la présente invention est de proposer une cellule de mesure destinée à contenir un capteur du type précité grâce à laquelle sera obtenue une excellente étanchéité entre l'espace situé d'un côté de la membrane et l'espace situé de l'autre côté.

Un autre objet de la présente invention est de proposer une cellule destinée à contenir un capteur du type précité grâce à laquelle le capteur sera protégé des chocs et autres atteintes mécaniques risquant de l'endommager.

Un troisième objet de la présente invention est de proposer une cellule pouvant être logée de façon facilement accessible dans un boitier comportant un bornier de raccordement.

Selon la présente invention et dans sa généralité une cellule pour la mesure de pression, mettant en oeuvre un capteur comprenant une membrane déformable, ledit capteur étant logé dans un évidement de forme correspondante d'un corps métallique de cellule dans lequel le capteur est maintenu par un couvercle métallique est caractérisé en ce que, le capteur étant en place dans l'évidement, le couvercle est scellé périphériquement et de façon étanche au corps de cellule, le scellement résultant de préférence d'une opération de soudage continu tout le long de la périphérie des corps et couvercles en contact.

Il résulte de cette disposition que le scellement par soudage procure à la fois une liaison mécanique forte entre le couvercle et le corps de cellule et une étanchéité parfaite de la liaison.

Préférablement, l'opération de soudage est réalisée entre deux collerettes en saillie bordant, chacune respectivement, les parties en contact du corps et du couvercle.

Cette disposition permet un soudage automatique des parties en contact.

Alternativement, le scellement pourrait résulter d'une opération de collage au moyen d'un adhésif, des parties en contact du corps et du couvercle; on sait en effet qu'il existe dans le commerce des adhésifs ou colles techniques ayant des propriétés de résistance pouvant satisfaire à une grande variété de situations.

Suivant une autre disposition principale de l'invention, un passage est prévu pour mettre en communication avec l'atmosphère l'évidement contenant le capteur; plusieurs modes de réalisation du passage sont proposés par l'invention.

Suivant un premier mode de réalisation, ledit passage est constitué par un large orifice ménagé dans la partie centrale du couvercle, ledit orifice permettant aussi la libre traversée de lignes de signaux.

Suivant un second mode ledit passage met en communication l'évidement contenant le capteur, avec l'atmosphère.

Dans le cas du second mode de réalisation précité, mode suivant lequel le couvercle ne comporte pas de larges orifices permettant la libre traversée des lignes de signaux, l'invention propose deux variantes de réalisation pour permettre la traversée des lignes.

Suivant une première variante du second mode, les lignes de transmission des signaux du capteur traversent le couvercle par des orifices ménagés dans le couvercle, lesdits orifices étant remplis de verre suivant la technique dite "d'enverrage" de telle sorte qu'à la fois soient obtenus l'isolation des lignes de transmission des signaux par rapport à la mise du couvercle et le bouchage étanche desdits orifices.

Suivant une deuxième variante du second mode, le couvercle est composé de deux parties: une partie périphérique et une partie centrale fermement solidaires l'une de l'autre, la partie centrale étant constituée d'un matériau plus noble que la partie périphérique et comportant lesdits orifices remplis de verre.

Enfin, l'invention propose, pour des cellules du second mode, une disposition de contention à la fois étanche et avec un faible jeu mécanique du capteur, pour une cellule dans laquelle l'évidement du corps de cellule comporte une partie en épaulement contre laquelle s'appuie ladite membrane déformable; suivant cette disposition, la partie en épaulement comporte deux gorges concentiques, l'une dite centrale, l'autre dite périphérique, lesdites gorges servant à contenir des joints conférant à la membrane un supplément de déformabilité et améliorant l'étanchéité entre une chambre de pression en regard de la membrane et l'évidement du corps de cellule.

La présente invention sera mieux comprise et des moyens en relevant apparaîtront à la description qui va être faite de formes préférées de réalisation en relation avec les figures des planches annexées, dans lesquelles:

la fig. 1 est une illustration en coupe d'une cellule de l'invention suivant le premier mode de réalisation,

les fig. 1a et 1b sont des illustrations en coupe de détails de pièces de la figure précédente respectivement avant et après soudage,

la fig. 1C est une coupe partielle d'une cellule selon l'invention dans laquelle le couvercle est conformé en bouchon,

la fig. 2 est une illustration analogue d'une cellule suivant la première variante d'un second mode de réalisation,

la fig. 3 est une illustration analogue d'une cellule suivant la deuxième variante du second mode de réalisation,

la fig. 4 est une coupe d'une cellule semblable à celle de la fig. 2, montée dans un boitier de contention, et

la fig. 4a illustre un détail en coupe suivant A de la fig. 4.

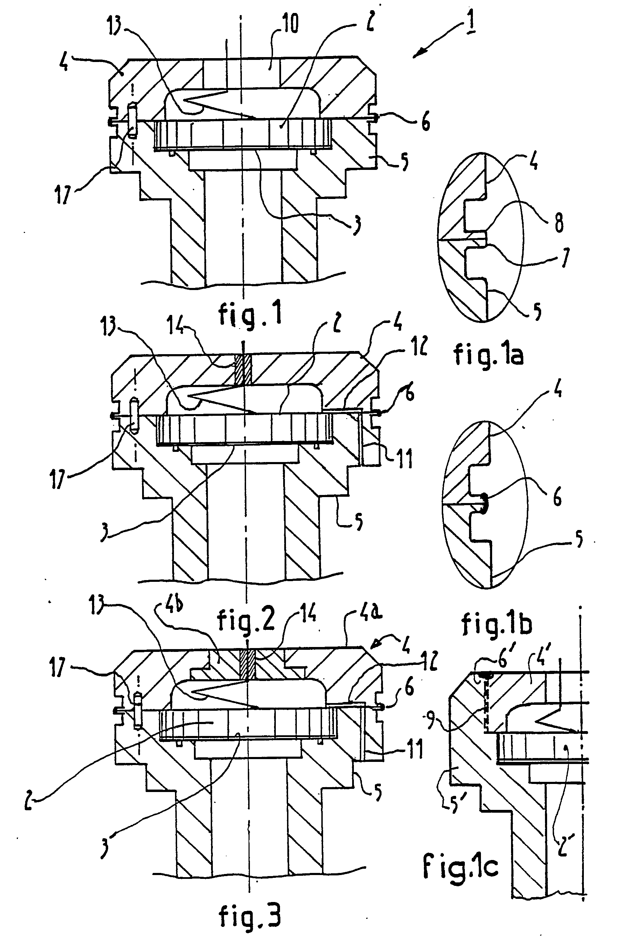

Sur la fig. 1, une cellule de mesure de pression désignée dans son ensemble par 1 comprend un capteur 2 à membrane déformable 3, un corps 5 de cellule et un couvercle 4.

Suivant l'invention, le corps 5 et le couvercle 4 sont soudés à leur périphérie le long de leur surface en contact au moyen d'un cordon de soudure 6. Ce cordon de soudure est continu tout autour de la cellule et il est avantageusement réalisé sur ou entre deux collerettes en saillie 7, 8 et cela sans métal d'apport de préférence, par simple fusion du métal des collerettes; les collerettes en saillie peuvent être formées par décolletage de rainures au voisinage du bord des surfaces en contact.

La caractéristique d'assemblage par soudage se retrouve dans toutes les autres formes de réalisation qui vont être décrites.

Suivant le premier mode de réalisation représenté en fig. 1, la traversée des lignes de signaux 13 est constituée par un large orifice 10 ménagé dans la partie centrale du couvercle 4.

Ce premier mode de réalisation peut encore avoir la forme d'exécution de la fig. 1c, suivant laquelle le couvercle est conformé en bouchon 4' vissable sur le corps 5' pourvu d'un filetage intérieur 9; un soudage par fusion est effectué en 6 à la ligne supérieure apparente des surfaces filetées en contact. Dans ce cas limite on peut encore dire que le couvercle est scellé périphériquement.

Suivant le second mode de réalisation représenté en fig. 2 et 3, la traversée des lignes de signaux 13 s'effectue par des petits orifices 14 ménagés dans le couvercle et remplis de verre; ce faisant les lignes 13 sont isolés du couvercle et leur traversée est étanche.

Ce mode de réalisation peut être exécuté suivant deux variantes. Suivant la première variante (fig. 2), le petit orifice 14 est pratiqué dans le couvercle lui-même. Suivant la deuxième variante (fig. 3), le petit orifice 14 est pratiqué dans une partie centrale 4b du couvercle fermement solidaire d'une partie périphérique 4a; la partie centrale 4b peut être constituée d'un métal plus noble donc en principe plus apte à supporter "l'enverrage" de la traversée de l'orifice 14; la partie 4b peut être manchonnée à chaud dans la partie 4a et être épaulée contre celle-ci et éventuellement lui y être soudée.

La mise à l'atmosphère de la face du capteur 2 opposé à la membrane 3 est réalisée, pour le premier mode de réalisation (fig. 1), par le large orifice 10 lui-même et pour les deux variantes (fig. 2 et 3) du second mode de réalisation par des évents 11 passant à travers la paroi du corps 5 et débouchant dans des rainures 12 des couvercles 4 le long de sa surface de contact avec le corps 5.

On remarquera sur certaines des figures la présence d'une goupille de centrage 17 logée dans des trous en regard percés dans le couvercle 4 et dans le corps 5; grâce à la clavette 17 on peut faire coïncider l'évent 11 et la rainure 12.

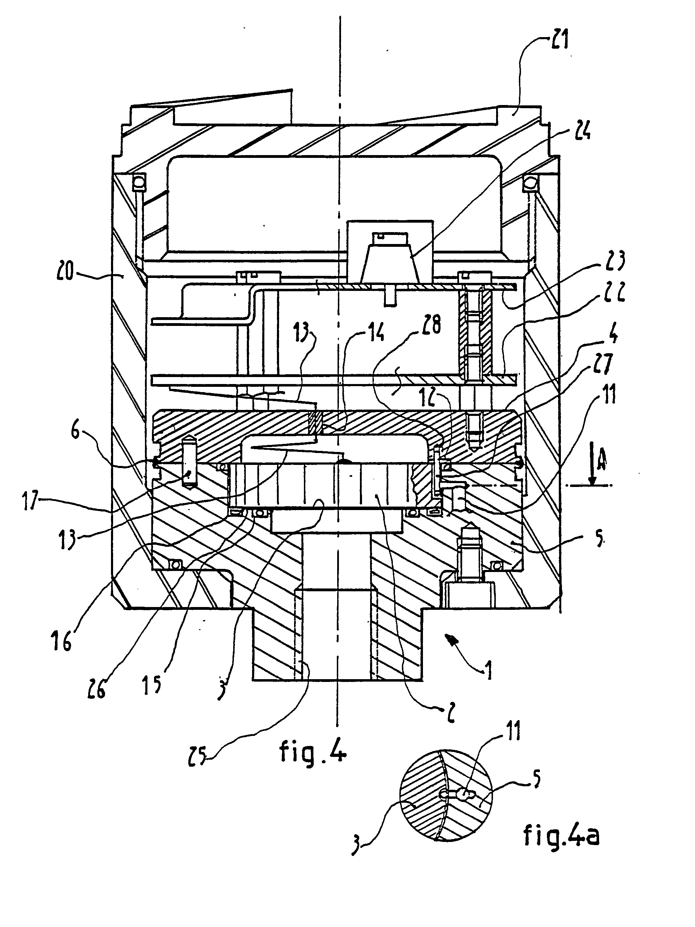

Sur les fig. 4 et 4a, une cellule 1 comparable à celle de la fig. 2 est logée dans un boitier 20 refermé par un capot 21.

Sur le couvercle 4 de la cellule 1 sont superposées deux platines 22 et 23 destinées à supporter respectivement des composants électroniques (non représentés sur la figure) et un bornier ou terminal 24. On remarque sur cette figure un certain nombre de détails qui n'ont pas été précisés sur les figures précédentes: on remarque en particulier que le corps 5 comporte une filetage intérieur 25 destiné à permettre le vissage de la cellule en bout d'un conduit sous pression; le conduit sous pression et l'espace interne du corps en regard de la membrane 3 peuvent contenir un gaz ou un mélange gazeux comportant un risque de corrosion ou d'explosion. Or, c'est le capteur seul qui va constituer une barrière entre cet espace à risque et l'atmosphère environnant dans lequel soit pourront se produire des étincelles ou autres flammes pouvant entraîner l'explosion, soit se trouver des organes sensibles à la corrosion. En outre, le capteur ne doit pas constituer un point de fuite en particulier pour ne pas perturber la mesure de pression. Il y aura donc un intérêt considérable à ce que le capteur soit logé de façon la plus étanche possible dans son logement du corps 5; dans ce but, l'évidement du corps de cellule constituant le logement du capteur comporte une partie en épaulement 26 contre laquelle s'appuie la membrane 3; cette partie en épaulement comporte avantageusement deux gorges concentriques, l'une dite centrale 15, l'autre dite périphérique 16, lesdites gorges servant à contenir des joints, des ciments, des mastics ou autres produits d'étanchéité, conférant à la membrane un supplément de déformabilité et améliorant l'étanchéité entre une chambre de pression en regard de la membrane et l'évidement du corps de cellule.

On remarque en outre sur cette figure qu'une aiguille 27 pénétrant dans un trou 28 du couvercle 4 sert à positionner le capteur dans son logement, le capteur comportant lui-même une rainure de positionnement le long d'une génératrice; suivant une caractéristique secondaire de l'invention, on utilisera cette rainure pour y faire déboucher l'évent 11, la rainure de couvercle 12 étant pratiquée au droit du trou 28. L'évent 11, bien que cela n'ait pas été représenté pour éviter de surcharger les dessins, débouche vers l'ouverture inférieure du boitier 20. Ainsi se trouve mise en relation avec l'atmosphère la face arrière ou supérieure du capteur 2 opposée à la membrane 3.

La présente invention trouve une application avantageuse dans la mesure de pression ou des pressions différentielles dans les installations de chimie ou de pétrochimie par exemple, dans lesquelles sont traités des gaz agressifs ou présentant des risques d'explosion.

Bien que l'on ait décrit et représenté des formes particulières et préférées de réalisation d'une cellule de capteur de pression conforme à l'invention, il doit être compris que la portée de celle-ci n'est pas limitée à ces formes mais qu'elle s'étend à toute cellule comportant les caractéristiques générales énoncées plus haut.

**Revendications**

1. Cellule (1) pour la mesure de pression, mettant en oeuvre un capteur (2) de forme générale cylindrique comprenant une membrane déformable (3), ledit capteur étant logé dans un évidement de volume correspondant définie par un corps metallique (5) de cellule d'une part, et par un couvercle (4) metallique servant au maintien du capteur d'autre part, caractérisé:

en ce que, le capteur étant en place dans l'évidement, le couvercle (4, 4') est scellé périphériquement (6, 6') et de façon étanche au corps (5, 5') de cellule,

et en ce que le scellement résulte d'une opération de soudage continu tout le long de la périphérie des corps et couvercle en contact.

2. Cellule selon la revendication 1, caractérisée:

en ce que ladite opération de soudage est réalisée entre deux collerettes en saillie (7, 8) bordant, chacune respectivement, les parties en contact du corps et du couvercle;

3. Cellule selon l'une quelconque des revendications 1 et 2, caractérisée:

en ce qu'un passage (10, 11) met en communication l'évidement contenant le capteur avec l'atmosphère.

4. Cellule selon la revendication 3, caractérisée:

en ce que ledit passage est constitué par un évent (11, 12) passant au moins à travers la paroi d,dit co-s (5).

5. Cellule selon la revendication 3, caractérisée:

en ce que ledit passage est constitué par un large orifice (10) ménagé dans la partie centrale du couvercle (4), ledit orifice permettant aussi la libre traversée de lignes (13) de signaux.

6. Cellule selon la revendication 3, caractérisée:

en ce que des lignes (13) de transmission des signaux du capteur traversent le couvercle par des orifices (14) ménagés dans le couvercle, lesdits orifices étant remplis de verre suivant la technique dite "d'enverrage" de telle sorte qu'à la fois soient obtenus l'isolation des lignes de transmission des signaux par rapport à la mise du couvercle, et le bouchage étanche desdits orifices.

7. Cellule selon la revendication 6, caractérisée:

en ce que ledit couvercle est composé de deux parties: une partie périphérique (4a) et une partie centrale (4b) fermement solidaires l'une de l'autre, la partie centrale étant constituée d'un matériau plus noble que la partie périphérique et comportant lesdits orifices (14) remplis de verre;

8. Cellule selon l'une quelconque des revendications précédentes, dans laquelle l'évidement du corps de cellule comporte une partie en épaulement (26) contre laquelle śappuie ladite membrane déformable caractérisée;

en ce que ladite partie en épaulement comporte deux gorges concentriques, l'une dite centrale (15), l'autre dite périphérique (16), lesdites gorges servant à contenir des joints conférant à la membrane un supplément de déformabilité et améliorant l'étanchéité entre une chambre de pression en regard de la membrane et l'évidement du corps de cellule.

**Patentansprüche**

1. Druckmeßdose (1) zum Betätigen eines Druckgebers (2), der imwesentlichen zylindrische Form hat, eine verformbare Membran (3) umfaßt und in einer Ausnehmung entsprechenden Volumens angeordnet ist, einerseits definiert von einem Metallgehäuse (5) der Dose sowie durch einen metallischen Deckel (4) andererseits, der dem Halten des Druckgebers dient, dadurch gekennzeichnet, daß der Deckel (4, 4') bei eingesetztem Druckgeber an seinem Umfang (6, 6') in dichter Weise im Gehäuse (5, 5') der Druckmeßdose angeordnet ist, und daß die Abdichtung durch eine kontinuierliche Schweißung entlang des Umfanges des mit dem Deckel in Berührung befindlichen Gehäuses erzielt ist.

2. Druckmeßdose nach Anspruch 1, dadurch gekennzeichnet, daß der Schweißvorgang zwischen zwei vorspringenden Bunden (7, 8) durchgeführt ist, deren jeder die in Berührung befindlichen Bereiche des Gehäuses und des Deckels überragt.

3. Druckmeßdose nach Anspruch 1 oder 2, dadurch gekennzeichnet, daß ein Durchlaß (10, 11) eine leitende Verbindung zwischen der den Druckgeber aufnehmenden Ausnehmung und der Atmosphäre herstellt.

4. Druckmeßdose nach Anspruch 3, dadurch gekennzeichnet, daß der Durchlaß aus Belüftungsbohrung (11, 12) besteht, die wenigstens durch die Wand des Gehäuses (5) hindurchgeführt ist.

5. Druckmeßdose nach Anspruch 3, dadurch gekennzeichnet, daß der Durchlaß aus einer großen Öffnung (10) besteht, die im zentralen Bereich des Deckels (4) vorgesehen ist, und die auch das freie Hindurchführen von Signalleitungen (13) erlaubt.

6. Druckmeßdose nach Anspruch 3, dadurch gekennzeichnet, daß die Signalübertragungsleitungen (13) des Druckgebers den Deckel durch Öffnungen (14) durchqueren, die im Deckel angeordnet sind, und die mittels einer Verglasungstechnik derart mit Glas angefüllt sind, daß gleichzeitig eine Isolierung der Signalübertragungsleitungen in Bezug auf das Einsetzen des Deckels sowie ein dichtes Verschließen der Öffnungen erzielt wird.

7. Druckmeßdose nach Anspruch 6, dadurch gekennzeichnet, daß der Deckel aus zwei Teilen aufgebaut ist, nämlich einem Umfangsteil (4a) und einem zentralen Teil (4b), die fest miteinander verbunden sind, und von denen der zentrale Teil aus einem edleren Material als der Umfangsteil besteht und die mit Glas ausgefüllten Öffnungen (14) umfaßt.

8. Druckmeßdose nach einem der vorausgegangenen Ansprüche, wobei die Ausnehmung des Gehäuses der Druckmeßdose einen Schulterteil (26) aufweist, gegen welchen sich die verformbare Membran abstützt, dadurch gekennzeichnet, daß der Schulterteil zwei zueinander konzentrische Nuten umfaßt, eine sogenannte Zentralnut (15) und eine sogenannte Umfangsnut (16), die dazu dienen, Dichtungen aufzunehmen, die dem Membran eine zusätzliche Verformbarkeit verleihen und die die Dichtheit zwischen einer Druckkammer im Bezug auf die Membran und die Ausnehmung des Gehäuses der Druckmeßdose verbessern.

## Claims

1. Cell (1) for the measurement of pressure, utilizing a sensor (2) of cylindrical general shape, comprising a deformable membrane (3), the said sensor being accommodated in a recess of corresponding volume, defined by a metallic cell body (5) on the one hand and by a metallic cover (4) serving to hold the sensor on the other hand characterized:

in that, the sensor being in place in the recess the cover (4 4') is sealed peripherally (6, 6') and in an impervious manner to the cell body (5, 5') and

in that the sealing results from a continuous welding operation along the entire length of the periphery of the bodies and cover in contact.

2. Cell according to Claim 1, characterized:

in that the said welding operation is carried out between two projecting flanges (7, 8), each respectively bordering on the parts in contact of the body and of the cover.

3. Cell according to either one of Claims 1 and 2, characterized:

in that a passage (10, 11) places the recess containing the sensor in communication with the atmosphere.

4. Cell according to Claim 3, characterized:

in that the said passage comprises a vent (11, 12) passing at least through the wall of the said body (5).

5. Cell according to Claim 3, characterized:

in that the said passage comprises a broad orifice (10) formed in the central part of the cover (4), the said orifice thus permitting the free crossing of signal lines (13).

6. Cell according to Claim 3, characterized:

in that lines (13) for the transmission of the signals from the sensor cross the cover through orifices (14) formed in the cover, the said orifices being filled with glass according to the technique called "of glass embedding" in such a manner that the insulation of the lines for the transmission of the signals in relation to the placing of the cover and the impervious plugging of the said orifices are obtained at the same time.

7. Cell according to Claim 6, characterized:

in that the said cover is composed of two parts: a peripheral part (4a) and a central part (4b) forming a firm solid unit one with the other, the central part being constructed of a material which is more noble than the peripheral part and comprising the said orifices (14) filled with glass.

8. Cell according to any one of the preceding claims, in which the recess of the cell body comprises a part in the form of a shoulder (26), against which the said deformable membrane is pressed, characterized in that the said part in the form of a shoulder comprises, two concentric throats, one called central (15), the other called peripheral (16), the said throats serving to contain seals imparting additional deformability to the membrane and improving the imperviousness between a pressure chamber opposite the membrane and the recess of the cell body.

fig.1

fig.1a

fig.2

fig.1b

fig.3

fig.1c

fig.4

fig.4a